(19) Europäisches Patentamt
European Patent Office
Office européen des brevets

(11) **EP 2 290 796 B1**

(12) **EUROPEAN PATENT SPECIFICATION**

(45) Date of publication and mention
of the grant of the patent:
**09.11.2016 Bulletin 2016/45**

(51) Int Cl.:
***H02M 3/335*** *(2006.01)*

(21) Application number: **10174949.7**

(22) Date of filing: **01.09.2010**

(54) **Switch mode power supply with burst mode**

Schaltnetzteil mit Burstbetrieb

Convertisseur à découpage et un mode rafale

(84) Designated Contracting States:
**AL AT BE BG CH CY CZ DE DK EE ES FI FR GB
GR HR HU IE IS IT LI LT LU LV MC MK MT NL NO
PL PT RO SE SI SK SM TR**

(30) Priority: **01.09.2009 CN 200910306436**

(43) Date of publication of application:
**02.03.2011 Bulletin 2011/09**

(73) Proprietor: **Monolithic Power Systems, Inc.
San Jose, CA 95119 (US)**

(72) Inventors:
• **Li, En
Hangzhou, Zhejiang 310012 (CN)**

• **Zhang, Junming
Hangzhou Zhejiang 31002 (CN)**

(74) Representative: **Leach, James et al
Mewburn Ellis LLP
City Tower
40 Basinghall Street
London EC2V 5DE (GB)**

(56) References cited:
**EP-A2- 1 179 884       EP-A2- 1 758 236
US-A1- 2006 181 253    US-A1- 2009 213 626
US-B1- 6 252 783**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

Printed by Jouve, 75001 PARIS (FR)

**Description**

This application claims priority from Chinese Patent Application No. 200910306436.2, filed September 1, 2009.

The present disclosure relates generally to switching mode power supplies and associated methods of control.

Switching mode power supplies are used in various applications. Multi-mode control is widely adopted in switching mode power supplies because of the generally high conversion efficiency. Generally, the multi-mode control comprises a pulse skip mode, i.e., the so-called burst mode. However, if the switching mode power supply is under burst mode, the equivalent frequency becomes very low, which may generate audible noise if the equivalent frequency is lower than 20kHZ. Thus it would be desirable to provide an improved switching mode power supply that can at least reduce or eliminate the audible noise under burst mode.

EP1179884A2 discloses a switching regulator utilizing on/off control that reduces audio noise at light loads by adjusting the current limit of the switching regulator. In one embodiment, a switching regulator includes a state machine that adjust the current limit of the switching regulator based on a pattern of feedback signal values from the output of the power supply for a preceding N cycles of the drive signal. The state machine adjusts the current limit lower at light loads such that cycles are not skipped to reduce the operating frequency of the switching regulator into the audio frequency range until the flux density through the transformer is sufficiently low to reduce the generation of audio noise.

US20090213626A1 provides a switching controller capable of reducing acoustic noise of a transformer for a power converter. The switching controller includes a switching circuit, a comparison circuit, an activation circuit, and an acoustic-noise eliminating circuit. The acoustic-noise eliminating circuit comprises a first-check circuit, a second-check circuit, a pulse-shrinking circuit, and a limit circuit. The first-check circuit receives a switching-current signal which is correlated to a switching current of the power converter and a PWM signal to generate a trigger signal. The second-check circuit receives the trigger signal to generate a control signal. When the frequency of the trigger signal falls into audio band, the control signal will be enabled to limit the switching current. Therefore, the acoustic noise of the transformer can be eliminated.

US20060181253A1 discloses a switching regulator utilizing on/off control that reduces audio noise at light loads by adjusting the current limit of the switching regulator. In one embodiment, a switching regulator includes a state machine that adjusts the current limit of the switching regulator based on a pattern of feedback signal values from the output of the power supply for a preceding N cycles of the drive signal. The state machine adjusts the current limit lower at light loads such that cycles are not skipped to reduce the operating frequency of the switching regulator into the audio frequency range until the flux density through the transformer is sufficiently low to reduce the generation of audio noise.

EP1758236A2 discloses various techniques directed to the digital control of a switching regulator. In one aspect, a method for regulating an output level at a power converter output includes receiving a feedback signal (137), representative of the output level at the power converter output. In response to a state of the power converter, at least one of the feedback signal or a threshold level (UTH) is adjusted. A feedback state signal (124) is generated having a first feedback state that represents that the output level is above the threshold level and a second feedback state that represents that the output level is below the threshold level. A duty cycle signal that cycles is generated. In response to a control signal (125), energy from a power converter input is enabled or disabled to flow to the power converter output. The control signal is responsive to the duty cycle signal and to a change between the first and second feedback states. The control signal is also responsive to a change between the first and second feedback states. In another aspect, a circuit is provided for regulating an output level of a power converter.

US6252783 discloses a switching power supply including a power switch and a mode controller that provides a mode control signal having a first level associated with a normal mode of operation of the switching power supply and a second level associated with a standby mode of operation of the switching power supply. The switching power supply further includes a feedback circuit coupled to the mode controller and a switching controller coupled to the feedback circuit. The feedback circuit has a voltage controlled current source that provides a feedback current which varies in response to the mode control signal. The switching controller switches the power switch in response to the feedback current so that in the normal mode of operation the power switch switches continuously at a predetermined frequency and in the standby mode of operation the power switch is switched on and off in bursts having a predetermined frequency.

BRIEF DESCRIPTION OF THE DRAWINGS

Figure 1 is a schematic diagram of a switching mode power supply in accordance with several embodiments of the technology.

Figure 2 is a schematic diagram of a controller suitable for use in the switching mode power supply of Figure 1 in accordance with several embodiments of the technology.

Figure 3 is a graph illustrating an example of multi-mode operation of the controller in Figure 2.

Figure 4 shows a waveform of a switching signal used to control the switching circuit when the switching mode power supply in Figure 2 is in burst mode.

Figure 5 shows an example of a light load peak current processor suitable for use in the controller of Figure 2.

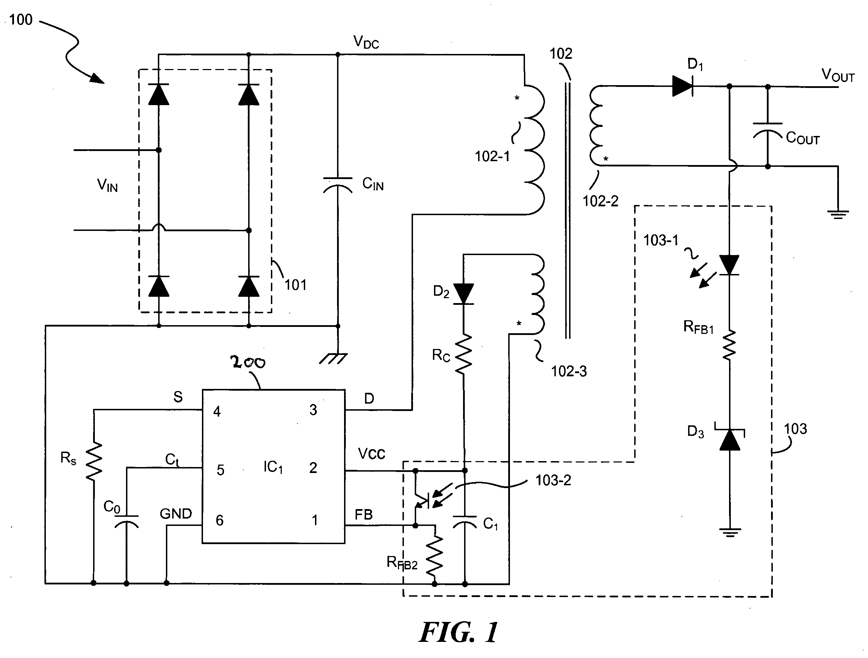

The present disclosure describes switch mode power supplies and associated methods of control. It will be appreciated that several of the details set forth below are provided to describe the following embodiments in a manner sufficient to enable a person skilled in the relevant art to make and use the disclosed embodiments. Several of the details and advantages described below, however, may not be necessary to practice certain embodiments of the invention. Additionally, the invention can include other embodiments that are within the scope of the claims but are not described in detail with respect to Figures 1-5.

Figure 1 is a schematic diagram of a switching mode power supply 100 in accordance with several embodiments of the technology. In one embodiment, the switching mode power supply 100 is configured as a flyback converter. The switching mode power supply 100 includes a rectifier bridge 101, a transformer 102, a feedback circuit 103, a controller 200, and a current sense resistor (Rs).

The transformer 102, in one embodiment, includes a primary winding 102-1, a main secondary winding 102-2, and an auxiliary secondary winding 102-3. In operation, the rectifier bridge 101 receives an AC input signal ($V_{IN}$), and converts it into a DC signal received by the primary winding 102-1 of the transformer 102. The transformer 102 is controlled by the controller 200 to generate DC output voltages on the secondary windings 102-2, 102-3 of the transformer 102. The controller 200 controls the current flow through the primary winding 102-1 of the transformer to effectively switch the transformer 102 on and off. The main secondary winding 102-2 provides a DC output voltage ($V_{OUT}$) at the output node via a first diode ($D_1$) and an output capacitor ($C_{OUT}$). The auxiliary secondary winding 102-3 provides a DC voltage source (Vcc) to supply the controller 200 via a second diode ($D_2$), a resistor ($R_C$) and a capacitor ($C_1$). Also illustrated in Figure 1 is an input capacitor ($C_{IN}$) that stores and filters the DC input voltage.

The feedback circuit 103 generates a feedback signal ($V_{FB}$) that is proportional to the output voltage ($V_{OUT}$) on the main secondary winding 102-2 of the transformer 102. In one embodiment, the feedback circuit 103 comprises an opto-coupler, a first feedback resistor ($R_{FB1}$), a Zener diode ($D_3$), and a second feedback resistor ($R_{FB2}$). As described in more detail below, the feedback signal is used by the controller 200 to control the switching frequency and the peak current of the switching regulator 100 as a function of the output voltage ($V_{OUT}$). The opto-coupler includes a photodiode 103-1 and a phototransistor 103-2. In operation, the intensity of the light emitted by the photodiode 103-1 is proportional to the output voltage ($V_{OUT}$). As the intensity of the photodiode 103-1 increases, so does the current flowing through the phototransistor 103-2, which generates the feedback signal ($V_{FB}$) across the second feedback resistor ($R_{FB2}$). Therefore, the feedback signal ($V_{FB}$) is proportional to the output voltage ($V_{OUT}$), *i.e.,* it increases as the load becomes lower and decreases as the load becomes higher. It should be understood, however, that in other embodiments the feedback circuit 103 and controller 200 may be configured such that the feedback signal ($V_{FB}$) is inversely proportional to the output voltage ($V_{OUT}$) or otherwise varies in relation to the output voltage ($V_{OUT}$).

The controller 200 includes a switching circuit that controls current flow through the primary winding 102-1 of the transformer 102. The power supplied to the output node may thus be controlled by varying the frequency at which the switching circuit switches the current through the primary winding 102-1 on and off. This is commonly referred to as the switching frequency of the transformer. The controller 200 further includes a frequency control circuit that controls the switching frequency as a function of the feedback signal ($V_{FB}$), which is proportional to the output voltage ($V_{OUT}$) on the transformer's main secondary winding 102-2. In addition, the controller 200 includes a current limiting circuit that sets a peak current limit that may be inversely proportional to the output voltage ($V_{OUT}$) by causing the switching circuit to suspend current flow through the primary winding 102-1 when the current reaches the peak current limit. In this way, both the switching frequency and the peak current limit may be regulated based on the output voltage ($V_{OUT}$) in order to improve system performance. For instance, the controller 200 may be configured to cause the switching frequency to decrease as the load becomes lower, and set the lowest switching frequency when the switching mode power supply enters burst mode. And the peak current limit may further decrease as the load becomes lighter when the switching mode power supply enters burst mode. The controller 200 may be further configured to set the peak current limit inversely proportionally to the output voltage ($V_{OUT}$) so that a high efficiency at lighter loads and a high average efficiency is achieved and noises are eliminated in burst mode.

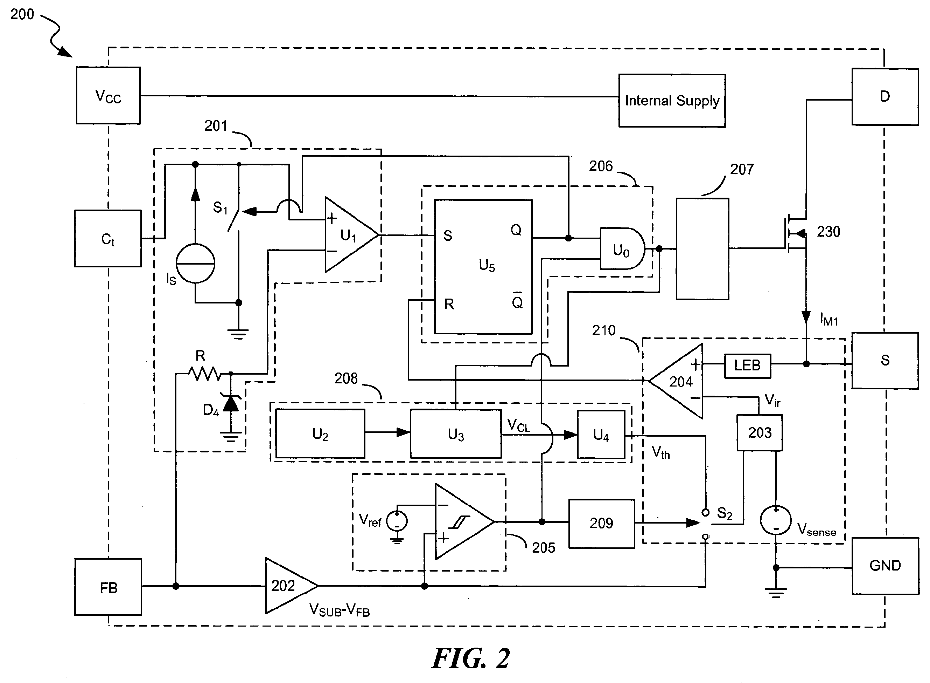

Figure 2 is a schematic diagram of a controller 200 suitable for use in the switching mode power supply 100 of Figure 1 in accordance with several embodiments of the technology. The controller 200 includes a switching circuit 230 (e.g., a MOSFET switch); a frequency control circuit 201, a subtracter 202, a burst mode control circuit 205, a logical circuit 206, a driver 207, a mode transition circuit 209, and a current limiting circuit 208, 210.

In one embodiment, the frequency control circuit 201 includes a current source ($I_s$), an electronic switch ($S_1$), a comparator ($U_1$), a Zener diode ($D_4$), and a resistor (R). The frequency control circuit 201 also includes an external capacitor (Co) shown in Figure 1. The electronic switch ($S_1$) is controlled to be on and off by the logical circuit 206. When the electronic switch ($S_1$) is on, the voltage drop across the external capacitor (Co) is reset to zero. When the electronic

switch ($S_1$) is off, voltage drop across the external capacitor (Co) increases because of the charge effect of the current source ($I_s$). When the voltage drop across the external capacitor (Co) reaches the voltage at the inverting input terminal of the comparator ($U_1$), the comparator ($U_1$) outputs a high level signal to the logical circuit 206, which will provide a logic signal to turn on the electronic switch ($S_1$). Thus the voltage drop across the external capacitor is reset again.

In one embodiment, the burst mode control circuit 205 comprises a hysteresis comparator which receives a voltage reference (Vref) at one input terminal and receives the output signal ($V_{SUB}$-$V_{FB}$) of the subtracter 202 at the other input terminal. The logical circuit 206 comprises a RS flip-flop ($U_5$), which receives the output signal of the frequency control circuit 201 at its set terminal (S), and receives the output signal of the current limiting circuit at its reset terminal (R). The logical circuit 206 further comprises an AND gate ($U_0$) which receives the output signal (Q) of the RS flip-flop at its first input terminal, and receives a burst mode signal provided by the burst mode control circuit 205 at its second input terminal.

In one embodiment, the current limiting circuit 208 includes an oscillator ($U_2$) which provides oscillation signals, a pulse processor ($U_3$), and a light load peak current processor ($U_4$). In one embodiment, the oscillator ($U_2$) provides oscillation signals only when the switching mode power supply enters burst mode. The pulse processor ($U_3$) receives the oscillation signals and the logical signal, and provides pulse processed signal ($V_{CL}$) based thereupon. The light load peak current processor ($U_4$) receives the pulse processed signal ($V_{CL}$), and provides a light load peak current processed signal ($V_{th}$) based thereupon. The current limiting circuit 210 includes a comparator 204, which is coupled to the switch circuit 230 via a leading edge blanking circuit (LEB); a peak current reference judging circuit 203, which receives a voltage reference ($V_{sense}$) in one input terminal, and receives the light load peak current processed signal ($V_{th}$) or the output signal ($V_{SUB}$-$V_{FB}$) of the subtracter 202 via a status switch ($S_2$) at the other input terminal, and provides a peak current limit ($V_{ir}$) based thereupon.

In one embodiment, the LEB circuit is a known circuit that reduces spikes in the signal by introducing a short delay. It should be understood, however, that in other embodiments there could be no LEB circuit. In one embodiment, the peak current reference judging circuit 203 compares the two input signals and selects the lower one to be its output signal, *i.e.,* the peak current limit ($V_{ir}$). The mode transition circuit 209 receives the burst mode signal and provides a mode control signal to control the status switch ($S_2$) to be coupled to the output of the light load peak current processor ($U_4$) or to the output of the subtracter. In one embodiment, when the burst mode signal indicates that the switching mode power supply enters burst mode, the status switch ($S_2$) is controlled to be coupled to the output of the light load peak current processor ($U_4$); when the burst mode signal indicates that the switching mode power supply is not under burst mode, the status switch ($S_2$) is controlled to be coupled to the output of the subtracter.

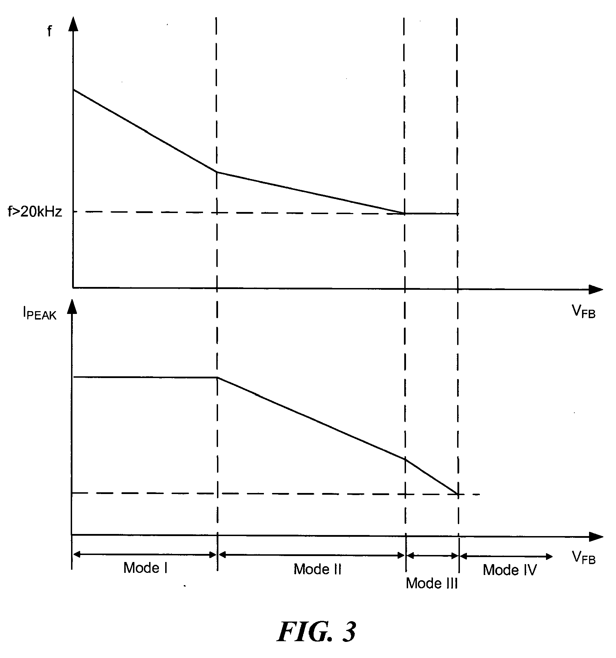

During operation of the switching mode power supply, if the load varies, i.e., the output voltage ($V_{OUT}$) varies, the feedback signal ($V_{FB}$) varies accordingly which is proportional to the output voltage ($V_{OUT}$) as illustrated hereinbefore. As a result, when the load becomes lighter, the switching mode power supply will enter the following modes as depicted in Figure 3:

(1): when the load is heavy, the feedback signal is low. The feedback signal increases as the load decreases. However, at first the feedback signal ($V_{FB}$) may be lower than the Zener diode ($D_4$) breakdown voltage ($V_{D4}$), and the output signal ($V_{SUB}$-$V_{FB}$) of the subtracter 202 may be higher than the voltage reference ($V_{sense}$) and the low limit ($V_{BRL}$) of the hysteresis comparator, *i.e.,* $V_{FB} < V_{D4}$, $V_{SUB}$-$V_{FB} > V_{sense}$, $V_{SUB}$-$V_{FB} > V_{BRL}$. As a result, the burst mode control circuit 205 indicates that the switching mode power supply is not under burst mode.

On one hand, the status switch (S2) is controlled to be coupled to the output of the subtracter 202. Because VSUB-VFB>Vsense, the peak current reference judging circuit 203 selects the voltage reference (Vsense) as the peak current limit (Vir). Thus the peak current limit (Vir) is constant during this mode. On the other hand, the voltage at the inverting input terminal of the comparator (U1) of the frequency control circuit 201 is the feedback signal (VFB). So the switching frequency (fs) of the switching mode power supply is:

$$ f_s = \frac{1}{T_{charge}} = \frac{1}{\dfrac{C_0 \times V_{FB}}{I_S}} = \frac{I_S}{C_0 \times V_{FB}} $$

As a result, the switching frequency ($f_s$) of the switching mode power supply decreases as the feedback signal ($V_{FB}$) increases, *i.e.,* as the load becomes lighter. The switching mode power supply is under mode I when the switching frequency varies as a function of the feedback signal and the peak current limit is constant.

(2): the load continues to be lighter, so the feedback signal ($V_{FB}$) keeps increasing. When the output signal ($V_{SUB}$-$V_{FB}$) of the subtracter 202 is lower than the voltage sense (Vsense), but still higher than the low limit ($V_{BRL}$) of the hysteresis comparator, and the feedback signal ($V_{FB}$) is still lower than the Zener diode ($D_4$) break down voltage

($V_{D4}$), *i.e.,* $V_{FB} < V_{D4}$, $V_{SUB} - V_{FB} < V_{sense}$, $V_{SUB} - V_{FB} > V_{BRL}$, the switching mode power supply enters mode II. The status switch ($S_2$) is still coupled to the output of the subtracter 202. In this mode, because the output signal ($V_{SUB} - V_{FB}$) of the subtracter 202 is lower than the voltage sense (Vsense), the peak current reference judging circuit 203 selects the output signal ($V_{SUB} - V_{FB}$) of the subtracter 202 as the peak current limit (Vir). As a result, the peak current limit ($V_{ir}$) decreases as the load becomes lighter. The voltage at the inverting input terminal of the comparator ($U_1$) of the frequency control circuit 201 is still the feedback signal ($V_{FB}$). So the switching frequency (fs) of the switching mode power supply also decreases as the load becomes lighter. That is, in mode II, both the switching frequency and the peak current limit vary as a function of the feedback signal.

(3): the load continues to be further lighter, the feedback signal ($V_{FB}$) keeps increasing. When the feedback signal ($V_{FB}$) goes higher than the Zener diode ($D_4$) break down voltage ($V_{D4}$), and the output signal ($V_{SUB} - V_{FB}$) of the subtracter 202 is lower than the voltage sense ($V_{sense}$), but still higher than the low limit ($V_{BRL}$) of the hysteresis comparator, *i.e.,* $V_{FB} > V_{D4}$, $V_{SUS} - V_{FS} < V_{sense}$, $V_{SUB} - V_{FB} > V_{BRL}$, the switching mode power supply enters mode III. The status switch ($S_2$) is still coupled to the output of the subtracter 202 because $V_{SUB} - V_{FB} > V_{BRL}$. In this mode, because the output signal ($V_{SUB} - V_{FB}$) of the subtracter 202 is lower than the voltage sense (Vsense), the peak current reference judging circuit 203 selects the output signal ($V_{SUB} - V_{FB}$) of the subtracter 202 as the peak current limit (Vir). As a result, the peak current limit ($V_{ir}$) decreases as the load becomes lighter. The voltage at the inverting input terminal of the comparator ($U_1$) of the frequency control circuit 201 changes to the Zener diode ($D_4$) break down voltage ($V_{D4}$). So the switching frequency (fs) of the switching mode power supply is:

$$f_s = \frac{1}{T_{charge}} = \frac{1}{\frac{C_0 \times V_{D4}}{I_S}} = \frac{I_S}{C_0 \times V_{D4}}$$

As a result, the switching frequency ($f_s$) of the switching mode power supply keeps constant and the load becomes lighter during this mode. That is, in mode III, the peak current limit varies as a function of the feedback signal and the switching frequency is constant.

(4): the load continues to be further lighter, the feedback signal ($V_{FB}$) keeps increasing. When the feedback signal ($V_{FB}$) goes higher than the Zener diode ($D_4$) break down voltage ($V_{D4}$), and the output signal ($V_{SUB} - V_{FB}$) of the subtracter 202 is lower than the voltage sense ($V_{sense}$) and the low limit ($V_{BRL}$) of the hysteresis comparator, *i.e.,* $V_{FB} > V_{D4}$, $V_{SUB} - V_{FB} < V_{sense}$, $V_{SUB} - V_{FB} < V_{BRL}$, the burst mode control circuit 205 indicates that the switching mode power supply enters burst mode. Accordingly, the status switch ($S_2$) is controlled to be coupled to the output of the light load peak current processor ($U_4$). During this mode, the lowest value of the switching frequency of the switching mode power supply is limited, and the peak current limit ($V_{ir}$) decreases as the load becomes lighter as described in more detail below.

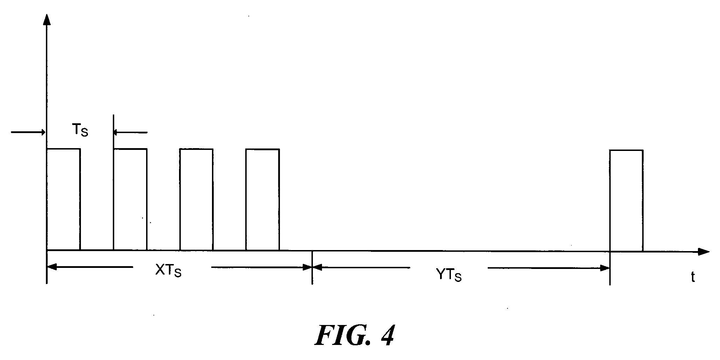

Figure 4 shows a waveform of the switching signal used to control the switching circuit 230 when the switching mode power supply in Figure 2 is in burst mode. In Figure 4, the y-axis represents the switching signal, and the x-axis represents time (t). In addition, Ts is the switching cycle of the switching mode power supply, X is the switching number when there is switching cycles, while Y is the switching number when there is no switching cycles. Thus, the equivalent frequency ($f_{eq}$) of the switching mode power supply is:

$$f_{eq} = \frac{X}{X + Y} \times \frac{1}{T_S}$$

For traditional burst mode control, X decreases and Y increases as the load becomes lighter. As a result, the equivalent frequency ($f_{eq}$) becomes lower as the load becomes lighter. When it falls into the audible frequency (*i.e.,* 20kHZ), noise is introduced. However, the embodiments in the technology can at least reduce or prevent the equivalent frequency ($f_{eq}$) from dropping into the audible range by further reducing the peak current limit when the switching mode power supply is in burst mode.

Specifically, when the switching mode power supply enters burst mode, the oscillator ($U_2$) outputs a series of instructions to the pulse processor ($U_3$), so that the pulse processor ($U_3$) starts to sense the switching signals, and record X and Y to get the equivalent frequency ($f_{eq}$). The pulse processor ($U_3$) further compares X, Y, and the equivalent frequency ($f_{eq}$) with preset $X_{set}$, $Y_{set}$, and feqset. In one embodiment, if the equivalent frequency $f_{eq}$ is lower than the preset frequency $f_{eqset}$, the pulse processed signal ($V_{CL}$) increases; if the equivalent frequency $f_{eq}$ is higher than the preset frequency feqset, the pulse processed signal ($V_{CL}$) decreases. The pulse processor ($U_3$) then provides the pulse processed signal ($V_{CL}$) to the light load peak current processor ($U_4$), so as to get the light load peak current processed signal ($V_{th}$) which varies inversely to the pulse processed signal ($V_{CL}$). By such regulation, X is regulated to the preset $X_{set}$, Y is regulated to the preset $Y_{set}$, and $f_{eq}$ is regulated to the preset feqset when the load is rather light. The operation of the light load peak current processor ($U_4$) will be described in more detail below.

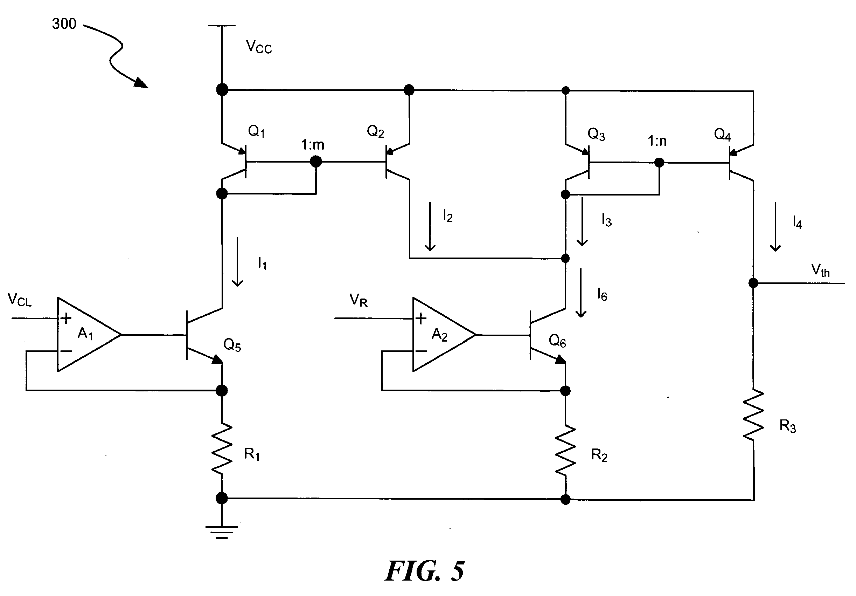

Figure 5 depicts an example of a light load peak current processor 300 suitable for use in the controller 200 of Figure 2. In one embodiment, the light load peak current processor 300 comprises a first amplifier ($A_1$), a second amplifier ($A_2$), six transistors ($Q_1$~$Q_6$), and three resistors ($R_1$~$R_3$). Wherein the first transistor ($Q_1$), the second transistor ($Q_2$), the third transistor ($Q_3$), and the fourth transistor ($Q_4$) are p-channel transistors; the fifth transistor ($Q_5$) and the sixth transistor ($Q_6$) are n-channel transistors. The non-inverting input terminal of the first amplifier (A1) is coupled to the pulse processed signal ($V_{CL}$), the inverting input terminal of the first amplifier ($A_1$) is coupled to the emitter of the fifth transistor ($Q_5$), and the output terminal of the first amplifier ($A_1$) is coupled to the base of the fifth transistor ($Q_5$). The first resistor ($R_1$) is coupled between the inverting input terminal of the first amplifier ($A_1$) and ground. That is, the first amplifier ($A_1$), the first resistor ($R_1$), and the fifth transistor ($Q_5$) form a voltage follower. The collector of the fifth transistor ($Q_5$) is coupled to the collector of the first transistor ($Q_1$). The first transistor ($Q_1$) and the second transistor ($Q_2$) form a first current mirror, wherein the current ratio of the current flow through the first transistor ($Q_1$) and the second transistor ($Q_2$) is 1: m.

The third transistor ($Q_3$) and the fourth transistor ($Q_4$) form a second current mirror, wherein the current ratio of the current flow through the third transistor ($Q_3$) and the fourth transistor ($Q_4$) is 1 : n. The second amplifier ($A_2$), the sixth transistor ($Q_6$), and the second resistor ($R_2$) forms a second voltage follower. The non-inverting input terminal of the second amplifier ($A_2$) is coupled to a second voltage reference ($V_R$). The collector of the sixth transistor ($Q_6$) is coupled to the collectors of the second transistor ($Q_2$) and the third transistor ($Q_3$). The third resistor ($R_3$) is coupled between the collector of the fourth transistor ($Q_4$) and ground. The voltage drop across the third resistor ($R_3$) is the output signal of the light load peak current processor 300, *i.e.,* it is the light load peak current processed signal ($V_{th}$).

As shown in Figure 5, the current flow through the first transistor ($Q_1$) is equal to the current flow through the first resistor ($R_1$), *i.e.,*

$$I_1 = \frac{V_{CL}}{R_1} \tag{1}$$

The current flow through the sixth transistor ($Q_6$) is the sum of the current flow through the second transistor ($Q_2$) and the current flow through the third transistor ($Q_3$), *i.e.,*

$$I_6 = \frac{V_R}{R_2} = I_2 + I_3 \tag{2}$$

And

$$I_2 = m \times I_1 \tag{3}$$

$$I_4 = n \times I_3 \tag{4}$$

Then

$$V_{th} = I_4 \times R_3 = n \times I_3 \times R_3 = n \times \left(\frac{V_R}{R_2} - m \times \frac{V_{CL}}{R_1}\right) \times R_3 \tag{5}$$

If the resistance of the first resistor ($R_1$), the second resistor ($R_2$), and the third resistor ($R_3$) are same, *i.e.,* $R_1 = R_2 = R_3$, and assume m=1, n=1, the equation (5) becomes:

$$V_{th} = V_R - V_{CL} \tag{6}$$

From equation (6), it can be seen that the light load peak current processed signal ($V_{th}$) is inversely proportional to the pulse processed signal ($V_{CL}$). As illustrated hereinbefore, the pulse processed signal ($V_{CL}$) is inversely proportional to the equivalent frequency ($f_{eq}$). So the light load peak current processed signal ($V_{th}$) is proportional to the equivalent frequency ($f_{eq}$). If the equivalent frequency ($f_{eq}$) becomes lower, so does the light load peak current processed signal ($V_{th}$).

In addition, the light load peak current processed signal ($V_{th}$) is lower than the voltage reference ($V_{sense}$) at this time. So the peak current reference judging circuit 203 selects the light load peak current processed signal ($V_{th}$) as the peak current limit ($V_{ir}$). That is, the peak current limit of the switching mode power supply decreases as the load becomes further lighter. In this way, the equivalent frequency ($f_{eq}$) increases, which avoids audible noises. When the switching mode power supply exits burst mode, the status switch ($S_2$) is controlled to be coupled to the output of the subtracter 202 by the mode transition circuit 209. Then the switching mode power supply enters mode I, mode II, or mode III.

The scope of the invention is defined by the appended claims.

**Claims**

1. A switching mode power supply (100), comprising:

   a transformer (102) having a primary winding (102-1) and a secondary winding (102-2) to supply power to a load;
   a feedback circuit (103) that generates a feedback signal (FB) that varies in relation to the load on the secondary winding (102-2);
   a switching circuit (230) coupled to the primary winding (102-1) to control current flow through the primary winding (102-1); and
   a controller (201, 202, 205-210) configured to control a switching frequency of the switching circuit (230) and to limit a current ($I_{M1}$) flow through the primary winding (102-1) by causing the switching circuit (230) to suspend current ($I_{M1}$) flow through the primary winding (102-1) when the current ($I_{M1}$) reaches a peak current limit (Vir) that is set based on the feedback signal (FB), wherein when the switching regulator is in a burst mode, the peak current limit (Vir) becomes lower as the load becomes lighter and the peak current limit (Vir) is set based on an equivalent frequency ($f_{eq}$), and the equivalent frequency ($f_{eq}$) is obtained by recording switching cycles (Ts) with switching pulses (X) and switching cycles (Ts) without switching pulses (Y) in a switching time (XTs, YTs) thereby avoiding a frequency range of below 20kHz for the equivalent frequency ($f_{eq}$).

2. The switching mode power supply of claim 1 (100), wherein the controller comprises:

   a frequency control circuit (201) configured to control the switching frequency of the switching circuit (230) based on the feedback signal (FB); and
   a current limiting circuit (210, 208) configured to limit the current ($I_{M1}$) flow through the primary winding (102-1) to the peak current limit (Vir).

3. The switching mode power supply (100) of claim 2, wherein the controller further comprises:

   a burst mode control circuit (205) configured to determine whether the switching mode power supply (100) is in the burst mode, and to provide a burst mode signal based on the determination; and
   a logical circuit (206) coupled to the frequency control circuit (201), the current limit circuit (210, 208), and the burst mode control circuit (205), as the logical circuit (206) being configured to provide a logical signal to control on/off of the switching circuit (230).

4. The switching mode power supply (100) of claim 3, wherein the current limiting circuit (210, 208) comprises:

   an oscillator (U2) configured to provide oscillation signals;
   a pulse processor (U3) configured to provide a pulse processed signal ($V_{CL}$) based on the oscillation signals and the logical signal;
   a light load peak current processor (U4) configured to provide a light load peak current processed signal (Vth) based on the pulse processed signal (VCL);
   a peak current reference judging circuit (203) configured to receive a voltage reference (Vsense) at one input terminal, and receive the light load peak current processed signal (Vth) or the feedback signal (FB) via a status switch (S2) at the other input terminal based on whether the switching mode power supply (100) is in the burst mode, and provide the peak current limit (Vir) based thereupon;
   a comparator (204) coupled to the output of the peak current reference judging circuit (203) and the switching circuit (230); and

the status switch (S2) controlled by the burst mode signal.

5. The switching mode power supply (100) of claim 4, wherein the light load peak current processor (U4) comprises:

a first voltage follower (A1, R1, Q5) configured to provide a first current signal (I1) based on the pulse processed signal ($V_{CL}$);

a first current mirror (Q1, Q2) configured to provide a second current signal (12) based on the first current signal (I1);

a second voltage follower (A2, Q6, R2) configured to provide a sixth current signal (I6) based on a reference signal ($V_R$);

a second current mirror (Q3, Q4) configured to provide a fourth current signal (14) based on the difference between the second current signal (I2) and the sixth current signal (16); and

a resistor (R3) coupled to the second current mirror (Q3, Q4) to obtain the light load peak current processed signal (Vth).

6. The switching mode power supply (100) of claim 4, wherein

the light load peak current processed signal (Vth) is coupled to the peak current reference judging circuit (203) if the switching mode power supply (100) is in burst mode; and

the feedback signal ($V_{SUB}$-$V_{FB}$) is coupled to the peak current reference judging circuit (203) if the switching mode power supply (100) is not in burst mode.

7. The switching mode power supply (100) of claim 4, wherein the light load peak current processed signal (Vth) becomes lower as the load becomes lighter.

8. The switching mode power supply of claim 4, wherein the peak current reference judging circuit (203) is configured to compare the input signals, and select the lower signal as an output signal.

9. A method for controlling a switching mode power supply (100), comprising:

determining whether the switching mode power supply (100) is in a burst mode;

if the switching mode power supply (100) is in the burst mode:

recording switching cycles (Ts) with switching pulses (X) and switching cycles (Ts) without switching pulses (Y) in a switching time (XTs, YTs) to obtain a current value of an equivalent frequency ($f_{eq}$);

generating a peak current limit (Vir) that decreases as a load becomes lighter based on the equivalent frequency ($f_{eq}$), thereby avoiding a frequency range of below 20kHZ for the equivalent frequency ($f_{eq}$); and

if the switching mode power supply (100) is not in the burst mode:

continuing to monitor whether the switching mode power supply (100) is in the burst mode.

10. The method of claim 9, wherein generating the peak current limit further comprises:

generating a pulse processed signal ($V_{CL}$) that is inversely proportional to the equivalent frequency ($f_{eq}$);

generating a light load peak current processed signal (Vth) that is inversely proportional to the pulse processed signal ($V_{CL}$); and

generating the peak current limit based on the light load peak current processed signal ($V_{CL}$).

**Patentansprüche**

1. Schaltmodus-Netzteil (100), umfassend:

einen Transformator (102), der eine Primärwicklung (102-1) und eine Sekundärwicklung (102-2) aufweist, um einer Last Leistung zuzuführen;

eine Rückkopplungsschaltung (103), die ein Rückkopplungssignal (FB) erzeugt, das in Bezug auf die Last auf der Sekundärwicklung (102-2) variiert;

einen Schaltkreis (230), der mit der Primärwicklung (102-1) gekoppelt ist, um den Stromfluss durch die Primärwicklung (102-1) hindurch zu steuern; und

eine Steuerungseinheit (201, 202, 205-210), die konfiguriert ist, eine Schaltfrequenz des Schaltkreises (230) zu steuern und einen Strom ($I_{M1}$) -Fluss durch die Primärwicklung (102-1) hindurch zu begrenzen, indem der Schaltkreis (230) veranlasst wird, den Strom ($I_{M1}$) -Fluss durch die Primärwicklung (102-1) zu unterbrechen, wenn der Strom ($I_{M1}$) einen Spitzenstromwert (Vir) erreicht, der auf Basis des Rückkopplungssignals (FB) eingestellt ist, worin, wenn der Schaltregler in einem Burst-Modus ist, der Spitzenstromgrenzwert (Vir) niedriger wird, wenn die Last schwächer wird, und der Spitzenstromgrenzwert (Vir) auf Basis einer entsprechenden Frequenz ($f_{eq}$) eingestellt ist, und die entsprechende Frequenz ($f_{eq}$) durch Aufzeichnen von Schaltzyklen (Ts) mit Schaltimpulsen (X) und Schaltzyklen (Ts) ohne Schaltimpulse (Y) in einer Schaltzeit (XTs, YTs) erreicht wird, wodurch ein Frequenzbereich von unter 20kHz für die entsprechende Frequenz ($f_{eq}$) vermieden wird.

2. Schaltmodus-Netzteil nach Anspruch 1 (100), worin die Steuerungseinheit Folgendes umfasst:

   eine Frequenzsteuerschaltung (201), die konfiguriert ist, die Schaltfrequenz des Schaltkreises (230) auf Basis des Rückkopplungssignals (FB) zu steuern; und

   eine Strombegrenzungsschaltung (210, 208), die konfiguriert ist, den Strom ($I_{M1}$) -Fluss durch die Primärwicklung (102-1) hindurch auf den Spitzenstromgrenzwert (Vir) zu begrenzen.

3. Schaltmodus-Netzteil (100) nach Anspruch 2, worin die Steuerungseinheit ferner Folgendes umfasst:

   eine Burst-Modus-Steuerschaltung (205), die konfiguriert ist zu bestimmen, ob das Schaltmodus-Netzteil (100) im Burst-Modus ist, und ein Burst-Modus-Signal auf Basis der Bestimmung bereitzustellen; und

   eine Logikschaltung (206), die mit der Frequenzsteuerschaltung (201), der Strombegrenzungsschaltung (210, 208) und der Burst-Modus-Steuerungsschaltung (205) gekoppelt ist, da die Logikschaltung (206) konfiguriert ist, ein Logiksignal zur EIN/AUS-Steuerung des Schaltkreises (230) bereitzustellen.

4. Schaltmodus-Netzteil (100) nach Anspruch 3, worin die Strombegrenzungsschaltung (210, 208) Folgendes umfasst:

   einen Oszillator (U2), der konfiguriert ist, Oszillationssignale bereitzustellen;

   einen Impulsprozessor (U3), der konfiguriert ist, ein verarbeitetes Impulssignal ($V_{CL}$) auf Basis der Oszillationssignale und des Logiksignals bereitzustellen;

   einen Schwachlastspitzenstromprozessor (U4), der konfiguriert ist, ein verarbeitetes Schwachlastspitzenstromsignal (Vth) auf Basis des verarbeiteten Impulssignals ($V_{CL}$) bereitzustellen;

   eine Spitzenstromreferenzbeurteilungsschaltung (203), die konfiguriert ist, eine Spannungsreferenz (Vsense) an einem Eingangsanschluss zu empfangen, und das verarbeitete Schwachlastspitzenstromsignal (Vth) oder das Rückkopplungssignal (FB) über einen Statusschalter (S2) am anderen Eingangsanschluss in Abhängigkeit davon zu empfangen, ob das Schaltmodus-Netzteil (100) im Burst-Modus ist, und einen darauf basierenden Spitzenstromgrenzwert (Vir) bereitzustellen;

   einen Komparator (204), der mit dem Ausgang der Spitzenstromreferenzbeurteilungsschaltung (203) und dem Schaltkreis (230) gekoppelt ist; und

   worin der Statusschalter (S2) durch das Burst-Modus-Signal gesteuert ist.

5. Schaltmodus-Netzteil (100) nach Anspruch 4, worin der Schwachlastspitzenstromprozessor (U4) Folgendes umfasst:

   einen ersten Spannungsfolger (A1, R1, Q5), der konfiguriert ist, ein erstes Stromsignal (I1) auf Basis des verarbeiteten Impulssignals ($V_{CL}$) bereitzustellen; einen ersten Stromspiegel (Q1, Q2), der konfiguriert ist, ein zweites Stromsignal (12) auf Basis des ersten Stromsignals (I1) bereitzustellen;

   einen zweiten Spannungsfolger (A2, Q6, R2), der konfiguriert ist, ein sechstes Stromsignal (16) auf Basis eines Referenzsignals ($V_R$) bereitzustellen;

   einen zweiten Stromspiegel (Q3, Q4), der konfiguriert ist, ein viertes Stromsignal (14) auf Basis der Differenz zwischen dem zweiten Stromsignal (12) und dem sechsten Stromsignal (16) bereitzustellen; und

   einen Widerstand (R3), der mit dem zweiten Stromspiegel (Q3, Q4) gekoppelt ist, um das verarbeitete Schwachlastspitzenstromsignal (Vth) zu erzielen.

6. Schaltmodus-Netzteil (100) nach Anspruch 4, worin
   das verarbeitete Schwachlastspitzenstromsignal (Vth) mit der Spitzenstromreferenzbeurteilungsschaltung (203) gekoppelt ist, wenn das Schaltmodus-Netzteil (100) im Burst-Modus ist; und

das Rückkopplungssignal ($V_{SUB}$-$V_{FB}$) mit der Spitzenstromreferenzbeurteilungsschaltung (203) gekoppelt ist, wenn das Schaltmodus-Netzteil (100) nicht im Burst-Modus ist.

7. Schaltmodus-Netzteil (100) nach Anspruch 4, worin das verarbeitete Schwachlastspitzenstromsignal (Vth) niedriger wird, sobald die Last schwächer wird.

8. Schaltmodus-Netzteil nach Anspruch 4, worin die Spitzenstromreferenzbeurteilungsschaltung (203) konfiguriert ist, die Eingangssignale zu vergleichen, und das niedrigere Signal als ein Ausgangssignal auszuwählen.

9. Verfahren zur Steuerung eines Schaltmodus-Netzteils (100), umfassend:

Bestimmen, ob das Schaltmodus-Netzteil (100) in einem Burst-Modus ist;
ist das Schaltmodus-Netzteil (100) im Burst-Modus:

Aufzeichnen von Schaltzyklen (Ts) mit Schaltimpulsen (X) und Schaltzyklen (Ts) ohne Schaltimpulse (Y) in einer Schaltzeit (XTs, YTs), um einen Stromwert einer entsprechenden Frequenz ($f_{eq}$) zu erreichen; Erzeugen eines Spitzenstromwerts (Vir), der abnimmt, wenn eine Last auf Basis der entsprechenden Frequenz ($f_{eq}$) schwächer wird, wodurch ein Frequenzbereich von unter 20kHz für die entsprechende Frequenz ($f_{eq}$) vermieden wird; und

wenn das Schaltmodus-Netzteil (100) nicht im Burst-Modus ist:

weiterhin Überwachen, ob das Schaltmodus-Netzteil (100) im Burst-Modus ist.

10. Verfahren nach Anspruch 9, worin das Erzeugen des Spitzenstromgrenzwerts ferner Folgendes umfasst:

Erzeugen eines verarbeiteten Impulssignals ($V_{CL}$), das umgekehrt proportional zur entsprechenden Frequenz ($f_{eq}$) ist;
Erzeugen eines verarbeiteten Schwachlastspitzenstromsignals (Vth), das umgekehrt proportional zum verarbeiteten Impulssignal ($V_{CL}$) ist; und
Erzeugen des Spitzenstromgrenzwerts auf Basis des verarbeiteten Schwachlastspitzenstromsignals ($V_{CL}$).

**Revendications**

1. Alimentation à découpage (100), comprenant :

un transformateur (102) comportant un enroulement primaire (102-1) et un enroulement secondaire (102-2) pour fournir une puissance à une charge ;
un circuit de rétroaction (103) qui génère un signal de rétroaction (FB) qui varie en relation avec la charge sur l'enroulement secondaire (102-2) ;
un circuit de commutation (230) couplé à l'enroulement primaire (102-1) pour commander la circulation de courant à travers l'enroulement primaire (102-1) ; et
un contrôleur (201, 202, 205 à 210) configuré pour commander une fréquence de commutation du circuit de commutation (230) et pour limiter la circulation d'un courant ($I_{M1}$) à travers l'enroulement primaire (102-1) en amenant le circuit de commutation (230) à suspendre la circulation du courant ($I_{M1}$) à travers l'enroulement primaire (102-1) lorsque le courant ($I_{M1}$) atteint une limite de courant crête (Vir) qui est fixée sur la base du signal de rétroaction (FB), dans laquelle, lorsque le régulateur de commutation est dans un mode de salves, la limite de courant crête (Vir) devient plus faible alors que la charge devient plus faible et la limite de courant crête (Vir) est fixée sur la base d'une fréquence équivalente ($f_{eq}$), et la fréquence équivalente ($f_{eq}$) est obtenue en enregistrant des cycles de commutation (Ts) avec des impulsions de commutation (X) et des cycles de commutation (Ts) sans impulsions de commutation (Y) pendant un temps de commutation (XTs, YTs), évitant de ce fait une plage de fréquence au-dessous de 20 kHz pour la fréquence équivalente ($f_{eq}$).

2. Alimentation à découpage (100) selon la revendication 1, dans laquelle le contrôleur comprend :

un circuit de commande de fréquence (201) configuré pour commander la fréquence de commutation du circuit de commutation (230) sur la base du signal de rétroaction (FB) ; et

un circuit de limitation de courant (210, 208) configuré pour limiter la circulation du courant ($I_{M1}$) à travers l'enroulement primaire (102-1) à la limite de courant crête (Vir).

**3.** Alimentation à découpage (100) selon la revendication 2, dans laquelle le contrôleur comprend en outre :

un circuit de commande de mode de salves (205) configuré pour déterminer si l'alimentation à découpage (100) est dans le mode de salves, et pour fournir un signal de mode de salves basé sur la détermination ; et
un circuit logique (206) couplé au circuit de commande de fréquence (201), le circuit de limitation de courant (210, 208), et le circuit de commande de mode de salves (205), le circuit logique (206) étant configuré pour fournir un signal logique pour commander la fermeture et l'ouverture du circuit de commutation (230).

**4.** Alimentation à découpage (100) selon la revendication 3, dans laquelle le circuit de limitation de courant (210, 208) comprend :

un oscillateur (U2) configuré pour fournir des signaux d'oscillation ;
un processeur d'impulsion (U3) configuré pour fournir un signal traité d'impulsions ($V_{CL}$) basé sur les signaux d'oscillation et le signal logique ;
un processeur de courant crête de faible charge (U4) configuré pour fournir un signal traité de courant crête de faible charge (Vth) basé sur le signal traité d'impulsions ($V_{CL}$) ;
un circuit de jugement de référence de courant crête (203) configuré pour recevoir une référence de tension (Vsense) au niveau d'une borne d'entrée, et pour recevoir le signal traité de courant crête de faible charge (Vth) ou le signal de rétroaction (FB) par une commutation d'état (S2) au niveau de l'autre borne d'entrée selon que l'alimentation à découpage (100) est ou non dans le mode de salves, et pour fournir la limite de courant crête (Vir) en fonction de la détermination ;
un comparateur (204) couplé à la sortie du circuit de jugement de référence de courant crête (203) et au circuit de commutation (230) ; et
le commutateur d'état (S2) commandé par le signal de mode de salves.

**5.** Alimentation à découpage (100) selon la revendication 4, dans laquelle le processeur de courant crête de faible charge (U4) comprend :

un premier suiveur de tension (A1, R1, Q5) configuré pour fournir un premier signal de courant (I1) basé sur le signal traité d'impulsions ($V_{CL}$) ;
un premier miroir de courant (Q1, Q2) configuré pour fournir un deuxième signal de courant (I2) basé sur le premier signal de courant (I1) ;
un deuxième suiveur de tension (A2, Q6, R2) configuré pour fournir un sixième signal de courant (I6) basé sur un signal de référence ($V_R$) ;
un deuxième miroir de courant (Q3, Q4) configuré pour fournir un quatrième signal de courant (I4) basé sur la différence entre le deuxième signal de courant (I2) et le sixième signal de courant (I6) ; et
une résistance (R3) couplée au deuxième miroir de courant (Q3, Q4) pour obtenir le signal traité de courant crête de faible charge (Vth).

**6.** Alimentation à découpage (100) selon la revendication 4, dans laquelle
le signal traité de courant crête de faible charge (Vth) est couplé au circuit de jugement de référence de courant crête (203) si l'alimentation à découpage (100) est dans le mode de salves ; et
le signal de rétroaction ($V_{SUB}$-$V_{FB}$) est couplé au circuit de jugement de référence de courant crête (203) si l'alimentation à découpage (100) n'est pas dans le mode de salves.

**7.** Alimentation à découpage (100) selon la revendication 4, dans laquelle le signal traité de courant crête de faible charge (Vth) devient plus faible alors que la charge devient plus faible.

**8.** Alimentation à découpage selon la revendication 4, dans laquelle le circuit de jugement de référence de courant crête (203) est configuré pour comparer les signaux d'entrée, et pour sélectionner le signal plus faible en tant que signal de sortie.

**9.** Procédé pour commander une alimentation à découpage (100), comprenant :

la détermination si l'alimentation à découpage (100) est dans le mode de salves ;

si l'alimentation à découpage (100) est dans le mode de salves :

l'enregistrement de cycles de commutation (Ts) avec des impulsions de commutation (X) et de cycles de commutation (Ts) sans impulsions de commutation (Y) pendant un temps de commutation (XTs, YTs) pour obtenir une valeur actuelle d'une fréquence équivalente ($f_{eq}$) ;
la génération d'une limite de courant crête (Vir) qui diminue alors que la charge devient plus faible sur la base de la fréquence équivalente ($f_{eq}$), évitant de ce fait une plage de fréquence au-dessous de 20 kHz pour la fréquence équivalente ($f_{eq}$) ; et

si l'alimentation à découpage (100) n'est pas dans le mode de salves :

la poursuite de la surveillance si l'alimentation à découpage (100) est dans le mode de salves.

10. Procédé selon la revendication 9, dans lequel la génération de la limite de courant crête comprend en outre :

la génération d'un signal traité d'impulsions ($V_{CL}$) qui est inversement proportionnel à la fréquence équivalente ($f_{eq}$) ;
la génération d'un signal traité de courant crête de faible charge (Vth) qui est inversement proportionnel au signal traité d'impulsions ($V_{CL}$) ; et
la génération de la limite de courant crête sur la base du signal traité de courant crête de faible charge ($V_{CL}$).

**FIG. 1**

EP 2 290 796 B1

*FIG. 2*

*FIG. 3*

**FIG. 4**

**FIG. 5**

EP 2 290 796 B1

## REFERENCES CITED IN THE DESCRIPTION

**Patent documents cited in the description**

- CN 200910306436
- EP 1179884 A2
- US 20090213626 A1
- US 20060181253 A1
- EP 1758236 A2
- US 6252783 B